# EUROPEAN PATENT APPLICATION

(11) **EP 4 793 258 A1**
(43) Date of publication of application: **19.08.2026**
(21) Application number: 24920126.0
(22) Date of filing: 27.11.2024
(51) Int. Cl.: C04B 35/638

(54) **METHOD FOR PRODUCING CERAMIC DEGREASED BODY AND METHOD FOR PRODUCING CERAMIC SINTERED BODY**

(30) Priority: 24.01.2024 JP 2024008726
(71) Applicant: Niterra Materials Co., Ltd., Yokohama-shi, Kanagawa 235-0032 (JP)
(72) Inventor: ITO, Zen, Yokohama-shi, Kanagawa 235-0032 (JP); KONDO, Hiroyasu, Yokohama-shi, Kanagawa 235-0032 (JP); SAKAI, Ryo, Yokohama-shi, Kanagawa 235-0032 (JP); OOKUBO, Kazuya, Yokohama-shi, Kanagawa 235-0032 (JP)
(74) Representative: Hoffmann Eitle
(86) International application number: PCT/JP2024/041987
(87) International publication number: WO 2025/158769

(57) **Abstract**

A manufacturing method according to an embodiment is a method for manufacturing a ceramic debindered body by heating and debinding a ceramic green body in a continuous furnace. The continuous furnace includes a heating part configured to heat the ceramic green body, a holding part configured to hold a temperature of the ceramic green body, and a cooling part configured to cool the ceramic green body. An oxygen concentration in at least a part of the heating part is lower than an oxygen concentration in at least a part of the holding part. An exothermic reaction caused by a change in the oxygen concentration is made to occur in the ceramic green body while the ceramic green body is passing through the at least the part of the holding part.

## Description

### [Technical Field]

Embodiments described herein relate generally to a method for manufacturing a ceramic debindered body and a method for manufacturing a ceramic sintered body.

### [Background Art]

Ceramic materials have characteristics including high hardness, insulation, and wear resistance. In particular, fine ceramics with high purity and a uniform particle size are used in various fields, such as capacitors, actuator materials, and refractory materials. To manufacture fine ceramics, a raw material is formed into the product shape, and thereafter, the ceramic green body is sintered. As a result, fine ceramics in a shape required for the product is obtained.

In the process of forming the raw material into the product shape, the forming is difficult only by processing powder, which is the raw material. Therefore, in order to facilitate the forming, a resin component called a binder is mixed with the raw material to obtain the ceramic green body. The ceramic green body is subjected to a debinding process before sintering. In the debinding process, the resin component in the ceramic green body is heated and removed. As a result of the debinding process, a ceramic debindered body is obtained. In order to efficiently remove the resin component in the debinding process, a batch furnace or a belt furnace has been used.

Patent Literature 1 describes a debinding method for inorganic compounds including ceramics. Patent Literature 1 describes a technique for preventing the explosion of combustible gas generated from a ceramic green body in debinding using a continuous furnace. Patent Literature 1 also describes a technique in which heat loss caused by exhaust gas flowing through an exhaust system is reduced and the debinding is performed.

Patent Literature 2 describes control of inflow gas at the time of debinding. According to Patent Literature 2, generation of cracks in the debindered body can be prevented by decreasing the oxygen gas concentration inside the furnace.

Patent Literature 3 describes debinding of a nitride green sheet using a continuous furnace. According to the technique described in Patent Literature 3, a ceramic green body can be debindered in air or an inert atmosphere by a continuous method.

### [Prior Art Documents]

### [Patent Literature]

[Patent Literature 1] Japanese Patent No. 4523499
[Patent Literature 2] International Publication No. WO2005/047207
[Patent Literature 3] JP2023-70973A

### [Summary of Invention]

### [Problem to be Solved by the Invention]

In a case where non-oxide ceramics are debindered by the debinding method described in Patent Literature 1, control of the combustion reaction is difficult, and there has been a possibility that the manufacturing takes a long time. In the debinding method described in Patent Literature 2, the amount of heat generated when the amount of oxygen is increased is large. In a case of controlling the exothermic state, there has been a possibility that the manufacturing takes a long time. In the debinding method described in Patent Literature 3, in a case of air debinding, the timing at which the exothermic reaction occurs is not controlled, and there has been a possibility that the surface of the debindered body is oxidized.

### [Means for Solving the Problem]

A manufacturing method according to an embodiment is a method for manufacturing a ceramic debindered body by heating and debinding a ceramic green body in a continuous furnace. The continuous furnace includes a heating part configured to heat the ceramic green body, a holding part configured to hold a temperature of the ceramic green body, and a cooling part configured to cool the ceramic green body. An oxygen concentration in at least a part of the heating part is lower than an oxygen concentration in at least a part of the holding part. An exothermic reaction caused by a change in the oxygen concentration is made to occur in the ceramic green body while the ceramic green body is passing through the at least the part of the holding part.

### [Brief Description of Drawings]

[FIG. 1] FIG. 1 is a top view of an example continuous furnace.
[FIG. 2] FIG. 2 is a cross-sectional view of the example continuous furnace.
[FIG. 3] FIG. 3A is a graph showing an example heat treatment condition in a manufacturing method according to an embodiment, FIG. 3B is a graph showing an example nitrogen concentration in portions of the continuous furnace, and FIG. 3C is a graph showing an example oxygen concentration in the portions of the continuous furnace.
[FIG. 4] FIG. 4 is a diagram schematically showing an example exothermic reaction of air debinding in debinding using the continuous furnace according to the embodiment.
[FIG. 5] FIG. 5 is a cross-sectional view showing an example in which green bodies are placed in a setter in the debinding using the continuous furnace according to the embodiment.
[FIG. 6] FIGS. 6A and 6B are cross-sectional views showing example temperature measurement of green bodies in a setter in the debinding using the continuous furnace according to the embodiment.
[FIG. 7] FIG. 7 is a flowchart showing the manufacturing method according to the embodiment.
[FIG. 8] FIG. 8 is a perspective view of an example ceramic substrate.
[FIG. 9] FIG. 9A is a side view of an example bearing ball, and FIG. 9B is a side view of an example bearing.

### [Description of Embodiments]

Hereinafter, a method for manufacturing a ceramic debindered body and a method for manufacturing a ceramic sintered body according to an embodiment will be described in detail with reference to the drawings.

A manufacturing method according to an embodiment is a method for manufacturing a ceramic debindered body by heating and debinding a ceramic green body in a continuous furnace. The continuous furnace includes a heating part configured to heat the ceramic green body, a holding part configured to hold a temperature of the ceramic green body, and a cooling part configured to cool the ceramic green body. An oxygen concentration in at least a part of the heating part is lower than an oxygen concentration in at least a part of the holding part. An exothermic reaction caused by a change in the oxygen concentration is made to occur in the ceramic green body while the ceramic green body is passing through the at least the part of the holding part.

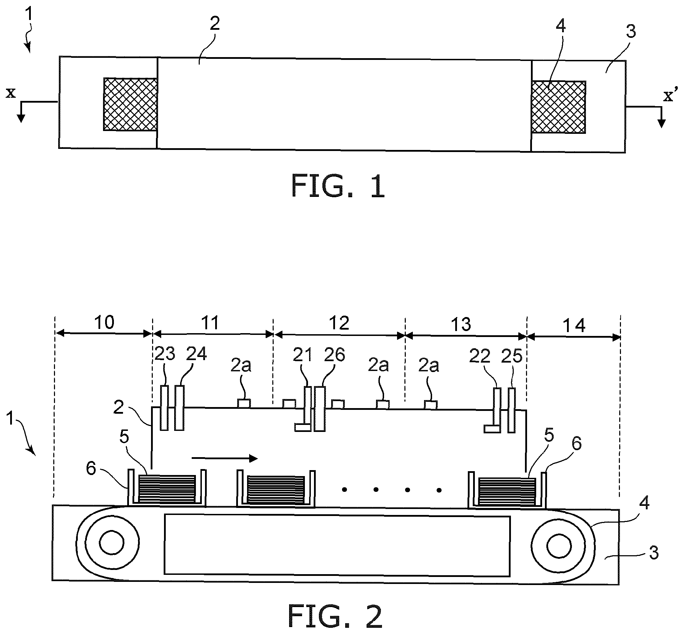

FIG. 1 is a top view of an example continuous furnace. FIG. 2 is a cross-sectional view showing X-X' cross section when a ceramic green body is passing through the continuous furnace in FIG. 1. In FIG. 1 and FIG. 2, reference numeral 1 denotes a continuous furnace, reference numeral 2 denotes a heating and cooling part, reference numeral 2a denotes a heater, reference numeral 3 denotes a body part, and reference numeral 4 denotes a belt part. In FIG. 2, reference numeral 5 denotes a ceramic green body (hereinafter simply referred to as "green body"), reference numeral 6 denotes a setter, reference numeral 10 denotes an entrance part, reference numeral 11 denotes a heating part, reference numeral 12 denotes a holding part, reference numeral 13 denotes a cooling part, and reference numeral 14 denotes an exit part.

The heating and cooling part 2 is provided on the body part 3 and includes a processing space for debinding the green body 5. On the top face of the body part 3, the belt part 4 is provided. The body part 3 includes a driving part not illustrated for driving the belt part 4. The green body 5 is placed on the belt part 4 and conveyed by the belt part 4. The green body 5 conveyed into the heating and cooling part 2 is heated and cooled while passing through the heating and cooling part 2. Then, the green body 5 that is debindered (debindered body) is conveyed out of the heating and cooling part 2.

In the example shown in FIG. 2, the setter 6 is placed on the belt part 4, and the setter 6 is conveyed by the belt part 4. A plurality of green bodies 5 are disposed in the setter 6. The setter 6 is conveyed by the belt part 4 from the entrance part 10 toward the exit part 14.

A space for debinding the green body 5 is provided inside the heating and cooling part 2, and the space includes the heating part 11, the holding part 12, and the cooling part 13. The heating part 11, the holding part 12, and the cooling part 13 form a continuous space. The temperatures in the individual spaces of the heating part 11, the holding part 12, and the cooling part 13 are different from each other. While passing through the heating part 11, the green body 5 is heated. While passing through the holding part 12, the temperature of the heated green body 5 is held. Thereafter, while passing through the cooling part 13, the green body 5 is cooled.

The heater 2a is provided on the outer periphery of the heating and cooling part 2. The heater 2a heats the heater 2a so that the portions of the heating and cooling part 2 respectively function as the heating part 11, the holding part 12, and the cooling part 13. In other words, the space inside the heating and cooling part 2 is differentiated into the heating part 11, the holding part 12, and the cooling part 13 based on changes in the temperature of the green body 5 passing through the space. For example, the disposition, the number, and the outputs of the heaters 2a are adjusted so that the green body 5 is subjected to heat treatment based on a temperature profile described below.

In FIG. 2, reference numeral 21 denotes a first supply part, 22 denotes a second supply part, 23 denotes a curtain gas supply part, 24 denotes an exhaust part, 25 denotes a curtain gas supply part, and 26 denotes an exhaust part. These elements are provided to control the atmosphere inside the heating and cooling part 2. In FIG. 1, the heater 2a, the first supply part 21, the second supply part 22, the curtain gas supply part 23, the exhaust part 24, the curtain gas supply part 25, and the exhaust part 26 are omitted.

The first supply part 21 supplies a first gas to the inside of the heating and cooling part 2. The first gas is an inert gas and does not substantially include oxygen. For example, the first gas is a nitrogen gas. The oxygen concentration in the first gas is preferably 0.1 vol% or less, and more preferably 0.01 vol% or less.

The second supply part 22 supplies a second gas to the inside of the heating and cooling part 2. The second gas includes oxygen. As long as oxygen is included, other components may be included in the second gas. The oxygen concentration in the second gas is preferably 10 vol% or more, more preferably 15 vol% or more, and most preferably 20 vol% or more. For example, air can be used as the second gas.

The first supply part 21 is provided at the heating part 11 or the holding part 12. The second supply part 22 is provided at the holding part 12 or the cooling part 13. The first supply part 21 is located between the entrance of the heating and cooling part 2 and the second supply part 22. In response to supply of the second gas by the second supply part 22, oxygen spreads from the second supply part 22 toward the heating part 11. In response to supply of the first gas by the first supply part 21, the spread of oxygen toward the heating part 11 is suppressed. The first gas and the second gas are supplied to thereby form a gradient of the oxygen concentration inside the heating and cooling part 2.

The curtain gas supply part 23 is provided at the entrance of the heating part 11 and supplies an inert gas. The curtain gas supply part 25 is provided at the exit of the cooling part 13 and supplies an inert gas. With the curtain gas supply part 23 and the curtain gas supply part 25, the pressure inside the heating and cooling part 2 is made higher than the pressure outside the heating and cooling part 2. This can prevent air outside the heating and cooling part 2 from flowing into the heating and cooling part 2. For example, the curtain gas supply part 23 and the curtain gas supply part 25 supply a nitrogen gas to form nitrogen curtains.

The exhaust part 24 is provided in the vicinity of the curtain gas supply part 23 to exhaust the gas inside the heating and cooling part 2. The first gas supplied from the first supply part 21 flows toward the exhaust part 24. The exhaust part 26 is provided in the vicinity of the first supply part 21 and exhausts the gas inside the heating and cooling part 2. The second gas supplied from the second supply part 22 flows toward the exhaust part 26. The flow of the first gas from the first supply part 21 toward the exhaust part 24 and the flow of the second gas from the second supply part 22 toward the exhaust part 26 can increase a change in the nitrogen concentration and a change in the oxygen concentration inside the heating and cooling part 2.

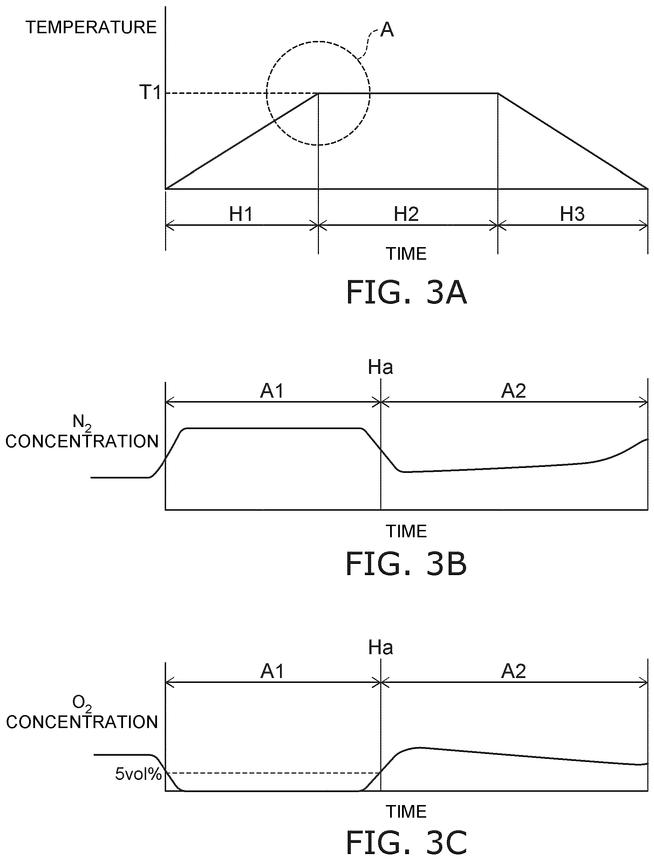

FIG. 3A is a graph showing an example heat treatment condition in a manufacturing method according to the embodiment. FIG. 3B is a graph showing an example nitrogen concentration in portions of the continuous furnace 1. FIG. 3C is a graph showing an example oxygen concentration in the portions of the continuous furnace 1. In FIGS. 3A to 3C, the horizontal axis represents the time elapsed since the green body 5 is conveyed into the heating and cooling part 2. In the continuous furnace 1, the green body 5 moves as time passes. Therefore, the horizontal axis corresponds to the position of the green body 5 in the heating and cooling part 2. The vertical axis in FIG. 3A represents the temperature of the space in which the green body 5 is located, which is substantially the same as the temperature of the green body 5. The vertical axes in FIGS. 3B and 3C represent the nitrogen concentration and the oxygen concentration, respectively.

Here, as shown in FIG. 3A, the time from the start of temperature increase of the green body 5 to the start of temperature holding of the green body 5 is referred to as "temperature increase time H1". The temperature of the green body 5 is increased by the heating part 11, and the temperature is held by the holding part 12. Therefore, the temperature increase time H1 is also the time from when the green body 5 enters the heating part 11 to when the green body 5 enters the holding part 12. The time from the start to the end of the temperature holding is referred to as "temperature holding time H2". The temperature holding time H2 is also the time from when the green body 5 enters the holding part 12 to when the green body 5 enters the cooling part 13. A temperature decrease time from the end of the temperature holding to the end of temperature decrease is referred to as "temperature decrease time H3". The temperature decrease time H3 is also the time from when the green body 5 enters the cooling part 13 to when the green body 5 exits the cooling part 13.

In the example shown in FIG. 3A, the temperature of the green body 5 is increased from room temperature to the temperature T1 and is held at the temperature T1. Thereafter, the green body 5 is cooled from the temperature T1 to 100°C or less (for example, room temperature). The holding temperature T1 refers to a range from the highest temperature to a temperature 50°C lower than the highest temperature. In other words, the time during which the temperature is held within the range from the highest temperature to a temperature 50°C lower than the highest temperature in the temperature profile is the temperature holding time H2. The time from the start of the temperature increase of the green body 5 to the start of the temperature holding time H2 is the temperature increase time H1. The time from the end of the temperature holding time H2 to when the green body 5 is cooled to 100°C is the temperature decrease time H3.

As shown in FIGS. 3B and 3C, the nitrogen concentration and the oxygen concentration change inside the heating and cooling part 2. Specifically, the nitrogen concentration in at least a part of the heating part 11 is higher than the nitrogen concentration in at least a part of the holding part 12. The oxygen concentration in at least a part of the holding part 12 is higher than the oxygen concentration in at least a part of the heating part 11.

In the example shown in FIG. 2, the first supply part 21 and the exhaust part 26 are provided near the boundary between the heating part 11 and the holding part 12. The first supply part 21 supplies the first gas toward the heating part 11. The second supply part 22 is provided at the cooling part 13 and supplies the second gas toward the holding part 12. Therefore, the nitrogen concentration and the oxygen concentration change to a large degree near the boundary between the heating part 11 and the holding part 12.

With the change in the oxygen concentration shown in FIG. 3C, the green body 5 is subjected to debinding by a low oxygen concentration and debinding by a high oxygen concentration. To simplify the explanation, the debinding by a low oxygen concentration is referred to as "nitrogen debinding". The debinding by a high oxygen concentration is referred to as "air debinding". As shown in FIGS. 3B and 3C, inside the heating and cooling part 2, an area in which the nitrogen debinding is performed is referred to as "first area A1". An area in which the air debinding is performed is referred to as "second area A2". The timing at which the nitrogen debinding is switched to the air debinding is referred to as "timing Ha".

The first area A1 includes at least a part of the heating part 11. The second area A2 includes at least a part of the holding part 12. In the first area A1, the oxygen concentration is less than 5 vol%. In the second area A2, the oxygen concentration is 5 vol% or more. The first area A1 and the second area A2 are distinguished from each other based on the oxygen concentration. Debinding performed in the space in which the oxygen concentration is less than 5 vol% is the nitrogen debinding. Debinding performed in the space in which the oxygen concentration is 5 vol% or more is the air debinding.

In a case where the air debinding is performed after the nitrogen debinding, an exothermic reaction occurs in the green body 5 due to the change in the oxygen concentration. In the manufacturing method according to the embodiment, the timing at which the exothermic reaction occurs is within the range of the temperature holding time H2. That is, the exothermic reaction occurs while the green body 5 is passing through the holding part 12.

If the timing at which the exothermic reaction occurs is within the range of the temperature holding time H2, since debinding by the temperature increase has already been completed, debinding by air progresses slowly and uniformly. In contrast, if the timing at which the exothermic reaction occurs is within the range of the temperature increase time H1, the debinding reaction progresses rapidly, and the debinding state may be unable to be controlled. If the debinding state is not appropriately controlled, the resin component may remain in the green body, and the characteristics of the debindered body may be degraded. If the timing at which the exothermic reaction occurs is within the range of the temperature decrease time H3, the nitrogen debinding is performed at the highest temperature. Even if the air debinding is performed thereafter, the air debinding may be insufficient, and the resin component adhered to the surface during the nitrogen debinding may remain without burning.

In the manufacturing method according to the embodiment, the timing Ha of switching from the nitrogen debinding to the air debinding is preferably between 0.5H1 and (H1 + 0.5H2), inclusive. In other words, in a case where the time from the start of the temperature increase of the green body 5 by the heating part 11 to the timing Ha at which the green body 5 enters the second area A2 is denoted by H, 0.5H1 ≤ H ≤ H1 + 0.5H2 is satisfied. For example, in the continuous furnace 1, in a case where the temperature increase time H1 is 3 hours, the temperature holding time H2 is 4 hours, and the temperature decrease time H3 is 5 hours, 0.5H1 represents 1.5 hours after the start of the temperature increase. (H1 + 0.5H2) represents 2 hours after the start of the temperature holding (5 hours after the start of the temperature increase). Since the timing Ha is between 0.5H1 and (H1 + 0.5H2), inclusive, the exothermic reaction caused by the change in the oxygen concentration can be made to occur within the range of the temperature holding time H2.

The exothermic reaction caused by switching to the air debinding occurs with a certain time lag after the oxygen concentration in the atmosphere around the green body 5 reaches 5 vol% or more. The exothermic reaction is a reaction in which the temperature of the debindered body becomes a temperature about 15°C to 25°C higher than the temperature inside the furnace after switching from the nitrogen debinding to the air debinding.

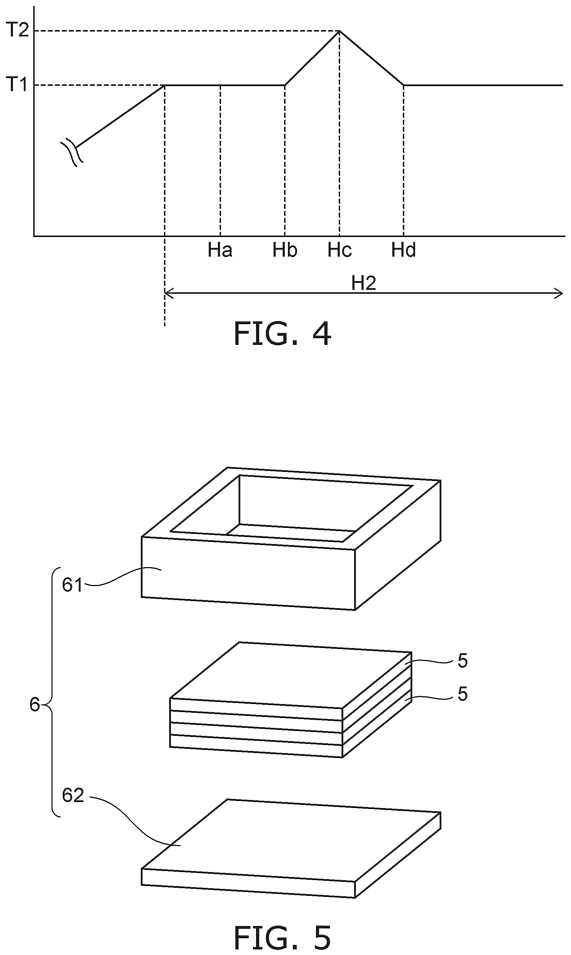

FIG. 4 is an enlarged graph of part A in FIG. 3. FIG. 4 schematically shows an example of the exothermic reaction by the air debinding in the manufacturing method according to the embodiment. In FIG. 4, Ha is the timing of switching to the air debinding, Hb is the start timing of the exothermic reaction, Hc is the peak timing of the exothermic reaction, Hd is the end timing of the exothermic reaction, T1 is the average temperature of the green body 5 during the temperature holding time H2, and T2 is the highest temperature of the green body 5 during the exothermic reaction.

The exothermic reaction is a reaction between the timing Hb and the timing Hd. However, it is difficult to precisely identify the timings Hb and Hd because the temperature of the green body 5 fluctuates during the temperature holding time H2. Therefore, the timing Hc at which the temperature reaches the peak is regarded as the timing at which the exothermic reaction occurs.

During the debinding, the resin component of, for example, the binder included in the green body 5 burns. In response to an increase in the oxygen concentration in the space in which the green body 5 is present, the combustion reaction of the resin component is accelerated. The exothermic reaction is caused by the acceleration of the combustion reaction. For example, in a case where an organic substance has a hydrocarbon group, carbon dioxide derived from carbon atoms and water derived from hydrogen atoms are generated, and the combustion heat generated at this time causes a temperature change.

When the timing at which the oxygen concentration reaches 5 vol% or more is controlled, the timing of the exothermic reaction by the air debinding can be controlled. At this time, the timing Hc at which the exothermic reaction occurs is preferably between 0.2H2 and the end of the temperature holding time H2, inclusive. In other words, in a case where the time from when the green body 5 enters the heating part 11 to the timing Hc at which the exothermic reaction occurs is denoted by HR, it is preferable that H1 + 0.2H2 ≤ HR ≤ H1 + H2 be satisfied. More preferably, the timing Hc at which the exothermic reaction occurs is between 0.4H2 and 0.8H2, inclusive, after the start of the temperature holding. That is, it is more preferable that H1 + 0.4H2 ≤ HR ≤ H1 + 0.8H2 be satisfied.

If the timings Ha and Hc can be controlled within the above-described ranges, the control of the atmosphere in the heating and cooling part 2 can be changed as appropriate. For example, the gases may be continuously supplied from the heating part 11 and the holding part 12, or the gas may be intermittently supplied from the heating part 11 or the holding part 12. The flow rate of the gas supplied from the heating part 11 or the holding part 12 may change in accordance with the conveyance position of the green body 5.

For example, the continuous furnace 1 is formed of one furnace tube as a whole. The temperatures at individual positions in the furnace tube are controlled, and a portion functioning as the heating part 11, a portion functioning as the holding part 12, and a portion functioning as the cooling part 13 are provided inside the furnace tube. When the air flow in the furnace tube is controlled, the concentrations of nitrogen and oxygen can be controlled as shown in FIGS. 3B and 3C.

One or more shutters may be provided inside the furnace tube to thereby provide a plurality of furnace chambers. Providing the shutters can control the air flow more precisely. For example, providing the shutters can facilitate control of the atmosphere in each furnace chamber. In this case, a furnace chamber for replacing the atmosphere may be provided between the first area A1 and the second area A2. In this furnace chamber, the gas is replaced as appropriate by nitrogen gas purge. When the shutter between a furnace chamber for nitrogen atmosphere and the furnace chamber for replacement is opened, the oxygen concentration in the furnace chamber for replacement is controlled to be less than 5 vol%.

The temperature increase time H1, the temperature holding time H2, and the temperature decrease time H3 are set as appropriate in accordance with the size of the green body 5, the number of green bodies 5, etc. Preferably, the temperature increase time H1 is not less than 1 hour and not more than 11 hours. The temperature holding time H2 is not less than 3 hours and not more than 5 hours. The temperature decrease time H3 is not less than 2 hours and not more than 10 hours. When the temperature increase time H1, the temperature holding time H2, and the temperature decrease time H3 are controlled within these ranges, the green body 5 can be debindered with a high yield while the debinding efficiency per hour is maintained.

The holding temperature T1 during the temperature holding time H2 is preferably within a range of not less than 350°C and not more than 650°C. If the holding temperature T1 is less than 350°C, the time taken to debind may become too long or the debinding may be unable to be sufficiently performed. On the other hand, if the holding temperature T1 exceeds 650°C, a non-oxide raw material may be oxidized due to the high temperature. Therefore, the holding temperature T1 is preferably within a range of not less than 350°C and not more than 650°C, and more preferably within a range of not less than 400°C and not more than 600°C.

In the manufacturing method according to the embodiment, the difference between the first mass of the green body 5 before entering the continuous furnace 1 and the second mass of the debindered body after being heated in the continuous furnace 1 is preferably not less than 1% and not more than 35% of the first mass. Here, a value obtained by dividing the difference between the first mass and the second mass by the first mass is referred to as "mass decrease percentage".

The shape of the green body 5 may be any of various shapes including a cylindrical shape, a spherical shape, a plate shape, and a sheet shape. The debinding efficiency changes in accordance with the shape of the green body 5 and the number of green bodies 5 to be simultaneously debindered. For example, in a case where the green body 5 has a spherical shape, the center portion of the sphere is less likely to be debindered than the peripheral portion of the sphere. In a case where the green body 5 has a sheet shape, although a single green body is easily debindered, in a case where a large number of green bodies 5 are stacked, each green body 5 is less likely to be debindered. The mass decrease percentage can be used as an index indicating the debinding state. A small mass decrease percentage indicates that the debinding is not sufficiently performed. A large mass decrease percentage indicates a possibility that the debinding is excessively performed.

A preferable mass decrease percentage changes in accordance with the shape of the green body 5. For example, in a case where the green body 5 has a cylindrical shape or a spherical shape, the mass decrease percentage is preferably within a range of not less than 1% and not more than 10%. In the case where the green body 5 has a cylindrical shape or a spherical shape, it is difficult to remove the resin component in the center portion of the green body 5 in a short time. In a case where the green body 5 is debindered so that the mass decrease percentage exceeds 10%, the debinding may take a long time. In contrast, in a case where the mass decrease percentage is less than 1%, the debinding might not be sufficiently performed. Here, "spherical shape" includes a shape in which an annular band portion is provided around the outer periphery of the sphere. For example, in a case where the green body 5 is formed by press die forming, a band portion is formed around the sphere.

In a case where the green body 5 has a plate shape or a sheet shape, forming is difficult, and therefore, a large amount of binder is included in the green body 5. The thickness of the sheet-shaped green body 5 is, for example, not less than 0.1 mm and not more than 1 mm. In this case, the mass decrease percentage is preferably within a range of not less than 10% and not more than 20%. In a case where the mass decrease percentage exceeds 20%, the debinding takes a long time, and a defect, such as warping or cracking, may occur in the green body 5. In contrast, in a case where the mass decrease percentage is less than 10%, the debinding is not sufficiently performed, and sufficient performance of the sintered debindered body (sintered body) might not be attained.

In a case where the green body 5 has another complicated shape, a larger amount of binder may be included in the green body 5 to facilitate forming. The complicated shape is, for example, a shape having an uneven surface, a shape having a nonuniform thickness, or a shape having holes therein. In this case, the mass decrease percentage is preferably within a range of more than 20% and not more than 35%.

For example, the temperature profile when the green body 5 passes through the continuous furnace 1 (heating and cooling part 2), which is shown in FIG. 3A, is acquired. The horizontal axis of the temperature profile represents time (h), and the vertical axis represents the temperature (°C). In this case, the integral value of time with respect to the temperature is preferably not less than 2500 and not more than 6500. This integral value corresponds to the area of a region surrounded by the line segments showing the temperature change with respect to time and the horizontal axis in the graph showing the temperature profile.

The product of the temperature and time affects the debinding state of the green body 5 to a large degree. For example, when the temperature of the green body 5 is 200°C or more, the binder included in the green body 5 reacts, and debinding of the green body 5 progresses. As long as the temperature is higher than or equal to the temperature at which the binder reacts, the specific temperature and time for the debinding can be set as appropriate. For example, heating treatment performed at a high temperature for a short time and heating treatment performed at a low temperature for a long time produce similar debinding effects.

If the integral value is smaller than 2500, the green body 5 might not be sufficiently debindered. Even if the integral value exceeds 6500, the obtained effect is small, leading to a decrease in production efficiency. Therefore, the integral value is preferably within a range of not less than 2500 and not more than 6500, and more preferably within a range of not less than 2800 and not more than 5000.

The average value of the temperature increase rate is preferably within a range of not less than 100°C/hour and not more than 250°C/hour. If the temperature increase rate is faster than 250°C/hour, debinding is rapidly performed, and this may cause cracks in the green body 5. If the temperature increase rate is slower than 100°C/hour, the temperature change is moderated more than necessary, and this may lead to a decrease in production efficiency. Therefore, the average value of the temperature increase rate is preferably within a range of not less than 100°C/hour and not more than 250°C/hour, and more preferably within a range of not less than 130°C/hour and not more than 230°C/hour.

The average value of the temperature decrease rate is preferably within a range of not less than 60°C/hour and not more than 250°C/hour. If the temperature decrease rate exceeds 250°C/hour and fast, a rapid temperature change may cause cracks in the green body 5. If the temperature decrease rate is less than 60°C/hour, the temperature change is moderated more than necessary, and this may lead to a decrease in production efficiency. Therefore, the average value of the temperature decrease rate is preferably within a range of not less than 60°C/hour and not more than 250°C/hour, and more preferably within a range of not less than 120°C/hour and not more than 180°C/hour. The average value of the temperature decrease rate is calculated based on a temperature change when the green body 5 is cooled from the holding temperature to 100°C.

During the debinding, the green body 5 may be stored in a setter. The continuous furnace 1 includes a moving mechanism for continuously moving the green body 5. The moving mechanism is, for example, of a belt type or a roller type. In the belt-type moving mechanism, the green body 5 is moved by a belt conveyor made of, for example, metal. In the rollertype moving mechanism, the green body 5 is moved on a roller. The moving mechanism is formed of a member, such as metal or ceramic, excelling in heat resistance. The setter is preferably placed on the moving mechanism.

FIG. 5 is a perspective view showing an example of a setter and a green body. In FIG. 5, reference numeral 6 denotes a setter. The setter 6 includes a frame setter 61 surrounding the outer periphery and a bottom-plate setter 62 located at the bottom. The setter 6 may be constituted by the frame setter 61 and the bottom-plate setter 62. Inside the setter 6, a plurality of sheet-shaped green bodies 5 are stacked. When the green bodies 5 are stored inside the setter 6, a small green body 5 can be prevented from dropping during debinding. Further, the use of the setter 6 can avoid contact between the green bodies 5 and the moving mechanism, and can avoid deterioration of the surface state of the green bodies 5 caused by the contact.

The configuration of the setter 6 is not limited to the example shown in FIG. 5. For example, the setter 6 need not include the frame setter 61 and may be constituted only by the bottom-plate setter 62. The frame setter 61 and the bottom-plate setter 62 may be integrally formed. The frame setter 61 may be formed by stacking a plurality of frame-shaped members.

The bottom-plate setter 62 preferably has a substantially quadrangular shape. For example, in a case where a plurality of setters 6 are placed on the belt part 4 as shown in FIG. 2, if the setters 6 have a substantially quadrangular shape in plan view, a larger number of setters 6 can be placed adjacent to each other on the belt part 4. As compared with a case where the bottom-plate setter 62 has a round shape, the quantity of the green bodies 5 that can be debindered can be increased. Further, in the case where the bottom-plate setter 62 has a substantially quadrangular shape, it is preferable that the corner portions be chamfered or round-chamfered. The chamfering can prevent the bottom-plate setter 62 from, for example, chipping.

The main component of the setter 6 is preferably any one type of aluminum oxide, zirconium oxide, mullite, boron nitride, silicon nitride, aluminum nitride, or silicon carbide. The "main component" refers to a component contained in an amount of 50 mass% or more. The material of the setter 6 is preferably the same as that of the green body 5. This is to suppress contamination of the green body 5 by the setter 6 when the green body 5 comes into contact with the setter 6.

In a case where a ceramic setter 6 is used, the setter 6 is preferably separable into the frame setter 61 and the bottom-plate setter 62 as shown in FIG. 5. Being separable can suppress deformation of the setter 6 due to shrinkage during, for example, cooling. Further, the debindered body can be easily taken out of the setter 6. Even in a case where a part of the setter 6 is broken, only the broken part is replaced so that required costs can be reduced.

For example, in a case where the green body 5 includes oxide ceramics, the setter 6 preferably includes aluminum oxide (alumina: Al₂O₃), zirconium oxide (zirconia: ZrO₂), or mullite (Al₆O₁₃Si₂). In a case where the green body 5 includes nitride ceramics, the setter 6 preferably includes boron nitride (BN), silicon nitride (Si₃N₄), or aluminum nitride (AIN). In a case where the green body 5 includes carbide ceramics, the setter 6 preferably includes silicon carbide (SiC).

In the debinding, the setter 6 may be heated up to about 650°C. The above-described materials of the setter 6 have a coefficient of thermal expansion of 10⁻⁴/K or less at 650°C. A small coefficient of thermal expansion can suppress cracking or deformation when the setter 6 is used in the debinding, and enables repeated use of the setter 6.

In a case where the setter 6 is made of metal, the metal may be adhered to the surface of the green body 5 when the green body 5 comes into contact with the setter 6 and is rubbed. The metal adhered to the surface of the green body 5 may cause a defect, such as foreign matter. If sintering is performed with foreign matter adhered to the debindered body, a sintered body to which the foreign matter is adhered is produced. The foreign matter adhered to the sintered body is likely to trigger destruction. Therefore, in a case where a setter made of metal is used, it is preferable that the setter 6 is subjected ceramic coating or other processing so that the metal is not adhered to the debindered body.

In a case where a plurality of green bodies 5 are stored in the setter 6, the temperature difference between the plurality of green bodies 5 is preferably small. For example, in the manufacturing method according to the embodiment, while the setter 6 is passing through the holding part 12, the maximum value of the difference between the temperature of the green body 5 stored in the upper portion of the setter 6 and the temperature of the green body 5 stored in the lower portion of the setter 6 is 80°C or less. In other words, in the manufacturing method according to the embodiment, the temperature difference between the plurality of green bodies 5 stored in the setter 6 is 80°C at maximum.

A temperature difference may occur between the plurality of green bodies 5 stored in the setter 6. The temperature difference may occur due to convection of the gas inside the heating and cooling part 2, inflow of the first gas, inflow of the second gas, the positions of the respective green bodies 5 in the setter 6, the number of green bodies 5 stored, thermal conduction of the setter 6, etc. It is preferable to adjust these elements to reduce the maximum value of the temperature difference. For example, when the difference in the total mass of the green bodies 5 stored in each setter 6 is made smaller, the maximum value of the temperature difference can be suppressed to 80°C or less.

When the temperature difference in the setter 6 is made smaller, variations in the debinding state of each green body 5 can be reduced. As a result, variations in the characteristics of the manufactured sintered bodies can be suppressed. The maximum value of the temperature difference is more preferably 70°C or less, and most preferably 60°C or less.

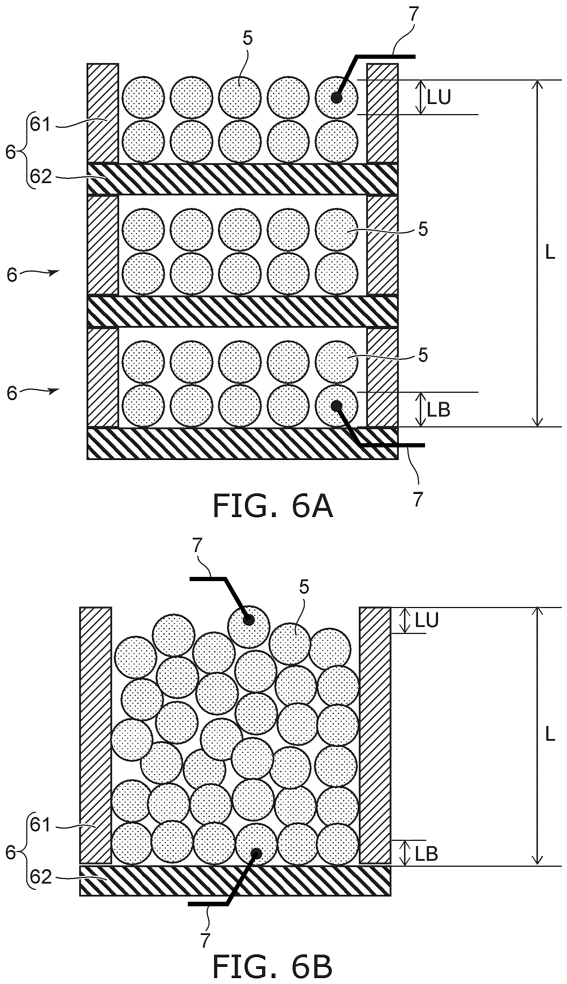

FIGS. 6A and 6B are cross-sectional views showing example temperature measurement in the manufacturing method according to the embodiment. In FIGS. 6A and 6B, reference numeral 7 denotes a thermocouple. The temperature difference is measured using the thermocouple 7.

In the example shown in FIG. 6A, three setters 6 are stacked, and each setter 6 is constituted by the bottom-plate setter 62 and the frame setter 61. A plurality of green bodies 5 are stored in each setter 6. In this case, one thermocouple 7 is located in the range LU and measures the temperature of any of the green bodies 5 disposed in the upper portion. Another thermocouple 7 is located in the range LB and measures the temperature of any of the green bodies 5 disposed in the lower portion. When the distance between the uppermost green body 5 and the lowermost green body 5 is denoted by L, the range LU is a range from the uppermost portion to 10% of the distance L. The range LB is a range from the lowermost portion to 10% of the distance L.

In the example shown in FIG. 6B, a plurality of green bodies 5 are stored in a large-sized setter 6 constituted by the bottom-plate setter 62 and the frame setter 61. As in the example shown in FIG. 6A, one thermocouple 7 is located in the range LU and measures the temperature of any of the green bodies 5 disposed in the upper portion. Another thermocouple 7 is located in the range LB and measures the temperature of any of the green bodies 5 disposed in the lower portion.

As described above, when the plurality of green bodies 5 are stored in the setter 6, variations in temperature between the green bodies 5 can be suppressed. Further, when the plurality of setters 6 are stacked and the plurality of green bodies 5 are stored in each setter 6, variations in temperature can be further suppressed and the debinding can be efficiently performed.

For example, if the temperature varies in one green body 5, the debinding state differs between the outer periphery and the center portion of the green body 5. In this case, the inside of the green body 5 is not sufficiently sintered, and the strength of the sintered body may decrease. If the temperature varies among the plurality of green bodies 5, some of the green bodies 5 might not be sufficiently debindered. If the green body 5 not sufficiently debindered is sintered, a sintered body having low density or discolored may be produced. In contrast, with the manufacturing method according to the embodiments described above, an excellent ceramic debindered body can be obtained.

With the manufacturing method according to the embodiment, the lightness (value) of the surface hue of the manufactured debindered body is controlled. For example, the lightness of the surface hue of the debindered body is not less than 7 and not more than 10 in terms of Munsell color system standard lightness V.

According to the embodiment, since the exothermic reaction is made to occur during the temperature holding time, the green body 5 is more uniformly debindered. As a result, the lightness of the surface hue of the debindered body becomes more uniform, and the lightness V becomes not less than 7 and not more than 10. The lightness V is more preferably within a range of not less than 8 and not more than 10.

In a case where the exothermic reaction occurs during the temperature increase time, the debinding progresses nonuniformly due to the rapid debinding reaction. As a result, the resin component partially remains in the debindered body, and the surface of a part of the debindered body becomes blackened. In a case where the exothermic reaction occurs during the temperature decrease time, the air debinding progresses in an incomplete combustion state. As a result, the resin component remains on the surface of the debindered body, and the surface becomes blackened in whole or in part. In the debindered body that is nonuniformly debindered, the lightness V becomes out of a range of not less than 7 and not more than 10 due to the influence of the blackened part.

The Munsell color system is measured in accordance with JIS Z 8721. For example, in the measurement, the surface of the debindered body is illuminated by using a halogen lamp of a voltage of 12 V and a power of 50 W, and the lightness of the surface is measured in any area of 5 mm in diameter.

The main component of the debindered body according to the embodiment is preferably silicon nitride. Silicon nitride excels in electrical insulation, mechanical strength, heat dissipation, and other characteristics. Therefore, the market has expanded for two types of uses in recent years. One of the uses is the use in silicon nitride substrates. Semiconductor elements that require a large current, such as power electronics and next-generation power semiconductors, have been developed. This leads to a year-by-year increase in the demand for silicon nitride substrates providing both heat dissipation and electrical insulation. In particular, heat generation of semiconductor elements has been increasing with a decrease in size and an increase in performance. For efficient heat dissipation, the thickness of ceramic substrates tends to become thinner. Meanwhile, for a reduction in manufacturing costs, ceramic substrates having a larger shape have been manufactured. In order to efficiently manufacture thin and large silicon nitride substrates, it has been required to efficiently debind a plurality of thin and large to-be-debindered bodies by stacking the bodies.

The other use is the use in balls, which are products taking advantage of the mechanical strength characteristics of silicon nitride. The use in balls includes the uses in bearings, jigs, tools, gauges, solenoid valves, check valves, and other various valves. Among these, in the use in bearings, silicon nitride balls having large outer diameters have been used for, for example, wind power generation. It has been required to efficiently debind to-be-debindered bodies that are silicon nitride balls having large outer diameters.

The manufacturing method according to the embodiment is suitable for debinding the green body 5 including silicon nitride. For example, the manufacturing method is applicable to, for example, a case of debinding the green bodies 5 in the shape of a thin and large substrate by stacking them, and a case of debinding the green body 5 in the shape of a large ball. According to the embodiment, a debindered body including silicon nitride as a main component can be efficiently manufactured.

When the manufactured debindered body is sintered, a sintered body exhibiting the characteristics of ceramics is obtained. When the debindered body manufactured by the manufacturing method according to the embodiment is used, a sintered body having excellent characteristics can be obtained. For example, in a case where a debindered body that is insufficiently or nonuniformly debindered is sintered, the sintering becomes nonuniform. A portion that is not sufficiently sintered does not exhibit the characteristics of ceramics. For example, variations in the density of the sintered body decrease the thermal conduction or strength of the sintered body.

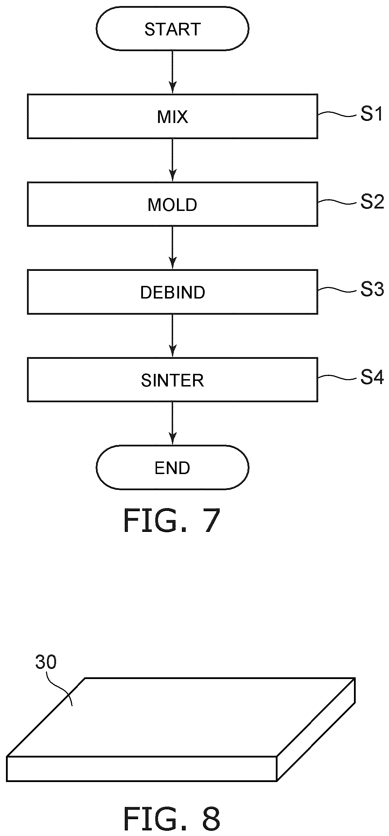

FIG. 7 is a flowchart showing the manufacturing method according to the embodiment. First, a raw material powder (a ceramic powder and a sintering aid) is prepared and, for example, a solvent and a binder are added to the raw material powder and mixed (step S1). The obtained mixture is formed to produce a green body (step S2). The green body is debindered by using a continuous furnace (step S3). As described above, the debinding is performed so that the exothermic reaction caused by the air debinding occurs during the temperature holding time. Thereafter, the manufactured debindered body is sintered to produce a sintered body (step S4).

FIG. 8 is a perspective view of an example ceramic substrate. In FIG. 7, reference numeral 30 denotes a ceramic substrate. The ceramic substrate 30 shown in FIG. 7 is obtained by debinding a sheet-shaped green body. The ceramic substrate 30 is preferably a silicon nitride substrate.

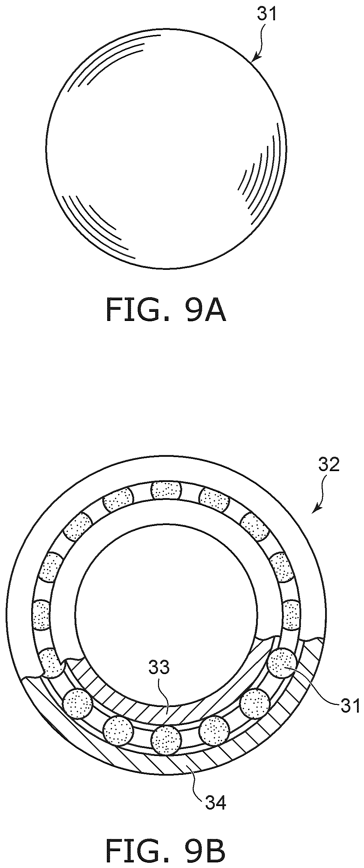

FIG. 9A is a side view of an example bearing ball. FIG. 9B is a side view of an example bearing. A ceramic sintered body can be used as a wear-resistant member. In FIGS. 9A and 9B, reference numeral 31 denotes a bearing ball. In FIG. 9B, reference numeral 32 denotes a bearing, reference numeral 33 denotes an inner ring, and reference numeral 34 denotes an outer ring.

The bearing ball 31 shown in FIG. 9A is a ball-shaped member formed of a silicon nitride sintered body. In the bearing 32 shown in FIG. 9B, a plurality of bearing balls 31 are disposed between the inner ring 33 and the outer ring 34.

In one example, a debindered body obtained by using the manufacturing method according to the embodiment is sintered to produce a silicon nitride sintered body to be used as a substrate. In this case, the three-point bending strength of the silicon nitride substrate can be increased to a high strength of 600 MPa or more, and further to a high strength of 700 MPa or more. The thermal conductivity can be increased to 50 W/m·K or more, and further to 80 W/m·K or more. According to the embodiment, a silicon nitride substrate having both high strength and high thermal conduction can be obtained.

In another example, a debindered body obtained by using the manufacturing method according to the embodiment is sintered to produce a silicon nitride sintered body to be used as a ball. In this case, the silicon nitride sintered body has a high Vickers hardness of about not less than 1400 and not more than 1800. The silicon nitride sintered body has a high toughness of about not less than 5 MPa·m^{1/2} and not more than 10 MPa·m^{1/2}. According to the embodiment, a silicon nitride sintered body having both high toughness and high Vickers hardness is obtained. The silicon nitride sintered body according to the embodiment has excellent wear resistance because of the high toughness and high Vickers hardness.

As long as the manufacturing method according to the embodiment has the above-described features, specific conditions can be set as appropriate. Here, an example method for manufacturing a ball-shaped silicon nitride sintered body with a high yield (the number of good products/the number of manufactured products) will be described.

First, for example, a sintering aid, an additive, a solvent, and a binder are added to a silicon nitride powder, which is a raw material, and mixed. The mixture is pulverized and granulated with a spray dryer. As a result of these processes, a granulated powder of the raw material powder is produced. In a case where the total of the silicon nitride powder and the sintering aid powder is assumed to be 100 mass%, the percentage of the silicon nitride powder is preferably 85 mass% or more. The additive is, for example, a plasticizer. The solvent is water or an organic solvent. The solvent is an organic solvent, such as alcohol, ketone, or benzene. The binder is a resin component, such as paraffin or polyvinyl alcohol (PVA). In the case where the total of the silicon nitride powder and the sintering aid powder is assumed to be 100 mass%, the added amount of the binder is preferably not less than 3 mass% and not more than 20 mass%. When the amount of the binder is adjusted, the ability to maintain the shape of the green body and the uniformity of the density of the green body can be adjusted. When the mixture is made into the granulated powder, the silicon nitride powder and the sintering aid powder can be uniformly mixed.

Next, a forming process of obtaining a green body by using the granulated powder is performed. In the forming process, for example, a mold forming method or a tumbling granulation method is performed. Subsequently, a process is performed in which the green body is subjected to cold isostatic pressing (CIP) processing. In the CIP processing, isostatic pressure is applied to the green body and the granulated powder is crushed, so that variations in density can be reduced.

Next, a debinding process of debinding the green body subjected to the CIP processing is performed. In the debinding process, the green body is heated at a temperature not less than the decomposition temperature of the resin component, such as the binder, to decrease the resin component included in the green body. For example, the CIP body obtained as a result of the CIP process is stored in a silicon nitride setter constituted by a bottom-plate setter and a frame setter. The CIP body put in the setter is heated in a continuous furnace to obtain a debindered body. For example, the debinding conditions including a temperature increase rate of 100°C/hour, a holding temperature of 500°C, a holding time of 4.0 hours, and a cooling rate of 100°C/hour are set. In the continuous furnace 1, the vicinity of the entrance side of the heating and cooling part 2 is in a nitrogen atmosphere. The atmosphere inside the heating and cooling part 2 is controlled so that nitrogen debinding is switched to air debinding 1.2 hours after the green body enters the heating and cooling part 2.

Next, a sintering process of sintering the debindered body is performed. The sintering process is preferably performed at not less than 1700°C and not more than 2000°C in a nitrogen atmosphere. The pressure at the time of sintering is preferably set within a range of not less than the atmospheric pressure and not more than 300 MPa. The atmospheric pressure is 0.10133 MPa (= 1 atm). The sintered body obtained as a result of the sintering process may be subjected to hot isostatic pressing (HIP) processing. In a case of manufacturing a ball-shaped silicon nitride sintered body, a ceramic sintered body having a theoretical density of 98% or more is produced.

The ball-shaped silicon nitride sintered body is polished to thereby manufacture a ceramic ball. A typical example of polishing of spheres is surface plate processing. For example, the silicon nitride ball sintered body is inserted between surface plates disposed in parallel. By the motion of the polishing surface plates, the sintered body for a ceramic ball is processed into a perfectly spherical shape. The surface roughness of bearing balls is specified in ASFMF 2094. Bearing balls are graded according to ASTM F2094, ISO 26602, or JIS R 1669 in accordance with their uses. Bearing balls are polished to the surface roughness Ra corresponding to the grade. Depending on the grade, mirror finishing may be performed so that the surface roughness Ra becomes 0.01 µm or less.

### (Examples 1 to 11 and Comparative Examples 1 to 8)

As shown in Table 1, in Examples 1 to 9 and Comparative Examples 1 to 6, a silicon nitride powder was prepared as a ceramic material. In Example 10 and Comparative Example 7, mullite was prepared as a ceramic material. In Example 11 and Comparative Example 8, an aluminum nitride powder was prepared. In Table 1, the silicon nitride powder was denoted by SiN, and the aluminum nitride powder was denoted by AIN. The silicon nitride powder contains silicon nitride in an amount of 85 mass% or more, and the aluminum nitride powder contains aluminum nitride in an amount of 85 mass% or more.

In Examples 1 to 6 and Comparative Examples 1 to 4, ball-shaped ceramics were produced. First, for example, a sintering aid, an additive, a solvent, and a binder were added to and mixed with the ceramic powder, which is a raw material. The mixture was dried with a spray dryer to obtain a granulated powder. The added amount of the binder was set within a range of 3 mass% to 15 mass% in a case where the total of the main component and the sintering aid was assumed to be 100 mass%. The obtained granulated powder was press-formed into a ball shape with a band and having an outer diameter of 8 mm to 20 mm to obtain a press-green body. Subsequently, the press-green body was subjected to the CIP processing.

In Examples 7 to 11 and Comparative Examples 5 to 8, sheet-shaped ceramics were produced. First, for example, a sintering aid, an additive, a solvent, and a binder were added to and mixed with the ceramic powder, which is a raw material. The mixture was formed into a sheet shape by a sheet forming machine. The sheet was punched with a die to obtain a sheet green body of 80 × 80 x 0.7 mm. The added amount of the binder was set within a range of 10 mass% to 25 mass% in the case where the total of the main component and the sintering aid was assumed to be 100 mass%.

A setter made of silicon nitride, mullite, or aluminum nitride was prepared. The setter includes a bottom-plate setter and a frame setter. The size of the bottom-plate setter is 100 × 100 × 5 mm. The frame setter has a polygonal tube shape, and its size is 100 × 100 mm in outer dimension, 90 × 90 mm in inner dimension, and 50 mm in height.

In Examples 1 to 6 and Comparative Examples 1 to 4, the ball-shaped press-green body was stored inside the setter. A plurality of press-green bodies were stored up to about 90% of the capacity of the setter. At the time of debinding, three setters were stacked.

In Examples 7 to 13 and Comparative Examples 5 to 8, the sheet-shaped green body was stored inside the setter. A plurality of green bodies were stacked up to about 90% of the capacity of the setter. At the time of debinding, two setters were stacked.

In the debinding, a belt-type continuous furnace was used. The setters were placed on the belt of the continuous furnace and were made to pass through the continuous furnace, thereby debinding the green bodies. The width of the belt is 25 cm. The temperature increase rate, the holding temperature, the holding time, and the cooling rate during the debinding are as shown in Table 1.

**[Table 1]**

| | Ceramics | Setter | Temperature increase rate (°C/hour) | Holding temperature (°C) | Holding time (hour) | Cooling rate (°C/hour) |
|---|---|---|---|---|---|---|
| Example 1 | SiN | SiN | 100 | 500 | 4.0 | 100 |
| Example 2 | SiN | SiN | 100 | 500 | 4.0 | 100 |
| Example 3 | SiN | SiN | 100 | 500 | 4.0 | 100 |
| Example 4 | SiN | SiN | 100 | 450 | 4.0 | 100 |
| Example 5 | SiN | SiN | 120 | 550 | 5.5 | 120 |
| Example 6 | SiN | SiN | 80 | 450 | 4.0 | 100 |
| Example 7 | SiN | SiN | 200 | 500 | 4.0 | 200 |
| Example 8 | SiN | SiN | 90 | 500 | 4.0 | 120 |
| Example 9 | SiN | SiN | 125 | 500 | 4.0 | 150 |
| Example 10 | SiN | Mullite | 120 | 500 | 4.0 | 130 |
| Example 11 | AlN | AlN | 130 | 500 | 4.0 | 150 |
| Comparative example 1 | SiN | SiN | 100 | 500 | 4.0 | 50 |
| Comparative example 2 | SiN | SiN | 125 | 500 | 4.0 | 150 |
| Comparative example 3 | SiN | SiN | 120 | 500 | 4.0 | 80 |
| Comparative example 4 | SiN | SiN | 80 | 550 | 5.5 | 80 |
| Comparative example 5 | SiN | SiN | 80 | 400 | 2.5 | 100 |
| Comparative example 6 | SiN | SiN | 120 | 500 | 4.0 | 80 |
| Comparative example 7 | SiN | Mullite | 120 | 500 | 4.0 | 80 |
| Comparative example 8 | AlN | AlN | 120 | 500 | 4.0 | 80 |

In Table 1, conditions related to temperatures were measured using thermocouples. One thermocouple was inserted into the upper portion of the upper setter. Another thermocouple was inserted into the lower portion of the lower setter. The average value of the temperatures measured with the two thermocouples was used as the temperature of the green bodies 5 to create a temperature profile. Based on the temperature profile, the temperature increase rate, the holding temperature, the holding time, and the cooling rate were measured.

The timing of switching from nitrogen debinding to air debinding in the debinding is as shown in Table 2. The exothermic reaction was identified from the temperature profile. The timing at which the temperature difference from the holding temperature became maximum (the timing Hc shown in FIG. 4) was identified as the timing at which the exothermic reaction by the air debinding occurred, and was shown in Table 2 as "exothermic reaction timing". In addition, the maximum temperature difference among the temperatures measured by the two thermocouples was measured. The temperature integral value was calculated from the temperature profile. The results were shown in Table 2.

**[Table 2]**

| | Switching timing | Exothermic reaction timing | Maximum temperature difference (°C) | Temperature integral value |
|---|---|---|---|---|
| Example 1 | 0.3H2 | 0.5H2 | 55 | 4385 |
| Example 2 | 0.7H2 | 0.9H2 | 63 | 4385 |
| Example 3 | 0.9H1 | 0.1H2 | 73 | 4385 |
| Example 4 | 0.6H1 | 0.1H2 | 65 | 3723 |
| Example 5 | 0.3H2 | 0.5H2 | 48 | 5441 |
| Example 6 | 0.3H2 | 0.5H2 | 35 | 3962 |
| Example 7 | 0.9H1 | 0.1H2 | 76 | 3198 |
| Example 8 | 0.9H1 | 0.1H2 | 46 | 4319 |
| Example 9 | 0.9H1 | 0.1H2 | 70 | 3752 |
| Example 10 | 0.9H1 | 0.1H2 | 58 | 3913 |
| Example 11 | 0.9H1 | 0.1H2 | 56 | 3715 |
| Comparative example 1 | 0.4H1 | 0.9H1 | 56 | 5573 |
| Comparative example 2 | 0.4H1 | 0.9H1 | 43 | 3752 |
| Comparative example 3 | 0.4H1 | (1.9H1 | 72 | 4484 |
| Comparative example 4 | 0.4H1 | 0.9H1 | 52 | 6652 |
| Comparative example 5 | 0.6H2 | 0.1H3 | 52 | 2698 |
| Comparative example 6 | 0.6H2 | 0.1H3 | 88 | 4493 |
| Comparative example 7 | 0.6H2 | 0.1H3 | 90 | 4486 |
| Comparative example 8 | 0.6H2 | 0.1H3 | 87 | 4485 |

In each Example and each Comparative Example, one debindered body was selected at random and a change in mass before and after the debinding (mass before debinding - mass after debinding) was calculated. The mass was measured using a precision balance. The amount of change was divided by the mass before the debinding and the result of division was multiplied by 100 to calculate the mass decrease percentage (%), which was shown in Table 3.

In each Example and each Comparative Example, ten debindered bodies were selected at random from among the plurality of obtained debindered bodies. The lightness of the surface of each debindered body was measured based on the Munsell color system. The lowest lightness among the lightnesses of the ten debindered bodies was shown in Table 3.

In each Example and each Comparative Example, 100 debindered bodies were selected at random from among the plurality of obtained debindered bodies. The debindered body yield in Table 3 is a defect rate determined by selecting any 100 debindered bodies under each condition, visually inspecting their appearances, and counting discolored and blackened debindered bodies.

**[Table 3]**

| | Mass decrease percentage (%) | Surface lightness V | Defect rate(%) |
|---|---|---|---|
| Example 1 | 5.5 | 7.6 | 4 |
| Example 2 | 5.1 | 7.1 | 2 |
| Example 3 | 5.3 | 8.3 | 6 |
| Example 4 | 3.6 | 8.7 | 1 |
| Example 5 | 6.3 | 8.1 | 5 |
| Example 6 | 1.2 | 7.8 | 7 |
| Example 7 | 19.1 | 7.5 | 6 |
| Example 8 | 19.1 | 8.0 | 5 |
| Example 9 | 10.5 | 8.6 | 3 |
| Example 10 | 9.3 | 8.2 | 4 |
| Example 11 | 19.1 | 8.4 | 2 |
| Comparative example 1 | 4.9 | 6.7 | 14 |
| Comparative example 2 | 5.1 | 5.1 | 52 |
| Comparative example 3 | 3.8 | 6.4 | 15 |
| Comparative example 4 | 14.3 | 6.7 | 19 |
| Comparative example 5 | 0.6 | 6.8 | 21 |
| Comparative example 6 | 25.0 | 6.1 | 20 |
| Comparative example 7 | 0.5 | 6.7 | 16 |
| Comparative example 8 | 2.7 | 6.6 | 35 |

As can be seen from Table 3, in Examples 1 to 11, the surface lightness was within the preferable range and the defect rate of the debindered bodies was low. This is considered to be because the timing at which the exothermic reaction by the air debinding occurred was within the temperature holding time H2, and the green bodies were satisfactorily debindered. When the green bodies are uniformly debindered, the surface lightness is within the preferable range and the occurrence of defects can be suppressed.

In contrast, in Comparative Examples 1 to 8, the lightness of the surface of the debindered body was out of the preferable range and the defect rate of the debindered bodies was high. This is considered to be because the timing at which the exothermic reaction by the air debinding occurred was outside the temperature holding time H2, and the debinding by the air debinding was insufficient. In Comparative Examples, it is considered that the resin component adhered to the surface during the nitrogen debinding remained without burning, and the surface was discolored accordingly.

Further, the obtained debindered bodies were subjected to a sintering process. The silicon nitride debindered bodies were sintered at 1750°C for 4 hours in a nitrogen gas atmosphere. The aluminum nitride debindered bodies were sintered at 1780°C for 3 hours in a nitrogen gas atmosphere. In Comparative Examples, the green bodies with defective debinding were sintered, and consequently, discoloration remained on the surfaces, and sintered bodies with defective discoloration were obtained.

As described above, under the conditions of Examples, appropriate debinding using the continuous furnace was performed, and an excellent yield was attained. In contrast, under the conditions of Comparative Examples, appropriate debinding was not performed, resulting in a low yield.

Embodiments of the invention include the following features.

### (Feature 1)

A method for manufacturing a ceramic debindered body by heating and debinding a ceramic green body in a continuous furnace,
the continuous furnace including
   a heating part configured to heat the ceramic green body,
   a holding part configured to hold a temperature of the ceramic green body, and
   a cooling part configured to cool the ceramic green body,
an oxygen concentration in at least a part of the heating part being lower than an oxygen concentration in at least a part of the holding part,
an exothermic reaction caused by a change in the oxygen concentration being made to occur in the ceramic green body while the ceramic green body is passing through the at least the part of the holding part.

### (Feature 2)

The method according to Feature 1, in which
the continuous furnace includes
a first area including the at least the part of the heating part, an oxygen concentration in the first area being less than 5 vol%, and
a second area including the at least the part of the holding part, an oxygen concentration in the second area being 5 vol% or more.

### (Feature 3)

The method according to Feature 2, in which
the first area is supplied with a first gas including nitrogen, and
the second area is supplied with a second gas including oxygen.

### (Feature 4)

The method according to Feature 2 or 3, in which 0.5H1 ≤ H ≤ H1 + 0.5H2 is satisfied, where H1 is a time from a start of temperature increase of the ceramic green body by the heating part to a start of temperature holding of the ceramic green body by the holding part, H2 is a time from the start to an end of the temperature holding of the ceramic green body by the holding part, and H is a time from the start of the temperature increase of the ceramic green body by the heating part to when the ceramic green body enters the second area.

### (Feature 5)

The method according to any one of Features 1 to 4, in which a difference between a first mass of the ceramic green body before entering the continuous furnace and a second mass of the ceramic debindered body after being heated in the continuous furnace is not less than 1% and not more than 35% of the first mass.

### (Feature 6)

The method according to any one of Features 1 to 5, in which in a case where a temperature profile when the ceramic green body passes through the continuous furnace is acquired and where a horizontal axis of the temperature profile represents time (h) and a vertical axis thereof represents a temperature (°C), an integral value of the time with respect to the temperature is not less than 2500 and not more than 6500.

### (Feature 7)

The method according to any one of Features 1 to 6, in which the ceramic green body is stored in a setter and passes through the continuous furnace.

### (Feature 8)

The method according to Feature 7, in which the setter includes any one type of aluminum oxide, zirconium oxide, mullite, boron nitride, silicon nitride, aluminum nitride, or silicon carbide as a main component.

### (Feature 9)

The method according to Feature 7 or 8, in which a plurality of the ceramic green bodies are stored in the setter.

### (Feature 10)

The method according to Feature 9, in which in the holding part, a maximum value of a difference between a temperature of at least one of the ceramic green bodies stored in an upper portion of the setter and a temperature of at least one of the ceramic green bodies stored in a lower portion of the setter is 80°C or less.

### (Feature 11)

The method according to any one of Features 1 to 10, in which in a case where a lightness of a surface hue of the manufactured ceramic debindered body is measured, the lightness is not less than V7 and not more than V10 in terms of a Munsell color system standard.

### (Feature 12)

The method according to any one of Features 1 to 11, in which a main component of the manufactured ceramic debindered body is silicon nitride.

### (Feature 13)

A method for manufacturing a ceramic sintered body, including:
performing the method for manufacturing a ceramic debindered body according to any one of Features 1 to 12; and
sintering the ceramic debindered body to manufacture a ceramic sintered body.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the invention. Moreover, above-mentioned embodiments can be combined mutually and can be carried out.

### [Reference Numeral List]

1 continuous furnace
2 heating and cooling part
2a heater
3 body part
4 belt part
5 debindered body
6 setter, 61 frame setter, 62 bottom-plate setter
7 thermocouple
10 entrance part
11 heating part
12 holding part
13 cooling part
14 exit part
21 first supply part
22 second supply part
23 curtain gas supply part
24 exhaust part
25 curtain gas supply part
26 exhaust part
30 ceramic substrate
31 bearing ball
32 bearing
33 inner ring
34 outer ring

## Claims

1. A method for manufacturing a ceramic debindered body by heating and debinding a ceramic green body in a continuous furnace,
the continuous furnace including
a heating part configured to heat the ceramic green body,
a holding part configured to hold a temperature of the ceramic green body, and
a cooling part configured to cool the ceramic green body,
an oxygen concentration in at least a part of the heating part being lower than an oxygen concentration in at least a part of the holding part,
an exothermic reaction caused by a change in the oxygen concentration being made to occur in the ceramic green body while the ceramic green body is passing through the at least the part of the holding part.

2. The method according to claim 1, wherein
the continuous furnace includes
a first area including the at least the part of the heating part, an oxygen concentration in the first area being less than 5 vol%, and
a second area including the at least the part of the holding part, an oxygen concentration in the second area being 5 vol% or more.

3. The method according to claim 2, wherein
the first area is supplied with a first gas including nitrogen, and
the second area is supplied with a second gas including oxygen.

4. The method according to claim 2 or 3, wherein 0.5H1 ≤ H ≤ H1 + 0.5H2 is satisfied, where H1 is a time from a start of temperature increase of the ceramic green body by the heating part to a start of temperature holding of the ceramic green body by the holding part, H2 is a time from the start to an end of the temperature holding of the ceramic green body by the holding part, and H is a time from the start of the temperature increase of the ceramic green body by the heating part to when the ceramic green body enters the second area.

5. The method according to claim 1 or 2, wherein a difference between a first mass of the ceramic green body before entering the continuous furnace and a second mass of the ceramic debindered body after being heated in the continuous furnace is not less than 1% and not more than 35% of the first mass.

6. The method according to claim 1 or 2, wherein in a case where a temperature profile when the ceramic green body passes through the continuous furnace is acquired and where a horizontal axis of the temperature profile represents time (h) and a vertical axis thereof represents a temperature (°C), an integral value of the time with respect to the temperature is not less than 2500 and not more than 6500.

7. The method according to claim 1 or 2, wherein the ceramic green body is stored in a setter and passes through the continuous furnace.

8. The method according to claim 7, wherein the setter includes any one type of aluminum oxide, zirconium oxide, mullite, boron nitride, silicon nitride, aluminum nitride, or silicon carbide as a main component.

9. The method according to claim 7, wherein a plurality of the ceramic green bodies are stored in the setter.

10. The method according to claim 9, wherein in the holding part, a maximum value of a difference between a temperature of at least one of the ceramic green bodies stored in an upper portion of the setter and a temperature of at least one of the ceramic green bodies stored in a lower portion of the setter is 80°C or less.

11. The method according to claim 1 or 2, wherein in a case where a lightness of a surface hue of the manufactured ceramic debindered body is measured, the lightness is not less than V7 and not more than V10 in terms of a Munsell color system standard.

12. The method according to claim 1 or 2, wherein a main component of the manufactured ceramic debindered body is silicon nitride.

13. A method for manufacturing a ceramic sintered body, comprising:
performing the method for manufacturing a ceramic debindered body according to claim 1 or 2; and
sintering the ceramic debindered body to manufacture a ceramic sintered body.
